# EUROPÄISCHE PATENTSCHRIFT

(11) **EP 2 618 923 B1**
(45) Veröffentlichungstag und Bekanntmachung des Hinweises auf die Patenterteilung: **13.01.2016**
(21) Anmeldenummer: 11773170.3
(22) Anmeldetag: 10.08.2011
(51) Int. Cl.: B01F 15/00, B01F 15/02, B01F 15/04, B05C 17/005, B01F 5/06, B01F 3/08, B05C 17/015

(54) **KARTUSCHENSYSTEM, VERFAHREN ZUM SYNCHRONISIEREN VON STRÖMEN UND VERFAHREN ZUM MISCHEN EINES MISCHGUTS**
CARTRIDGE SYSTEM, METHOD FOR SYNCHRONIZING STREAMS, AND METHOD FOR MIXING A MIXABLE MATERIAL
SYSTÈME DE CARTOUCHE, PROCÉDÉ DE SYNCHRONISATION DE COURANTS ET PROCÉDÉ DE MÉLANGE D'UN PRODUIT ENROBÉ

(30) Priorität: 22.09.2010 DE 102010046054
(43) Veröffentlichungstag der Anmeldung: 31.07.2013
(73) Patentinhaber: Heraeus Medical GmbH, 61273 Wehrheim (DE)
(72) Erfinder: VOGT, Sebastian, 99092 Erfurt (DE); BUECHNER, Hubert, 90491 Nuernberg (DE)
(74) Vertreter: Sterzel, Roland
(86) Internationale Anmeldenummer: PCT/EP2011/003995
(87) Internationale Veröffentlichungsnummer: WO 2012/038005

(56) Entgegenhaltungen:
- EP-A1- 0 633 056
- WO-A1-95/24556
- WO-A1-2006/071136
- DE-B- 1 161 140
- DE-U1- 8 529 804
- US-A- 4 090 262
- US-A- 4 260 077
- US-B2- 6 820 766

## Beschreibung

Die Erfindung betrifft ein Kartuschensystem nach Anspruch 1 zum Mischen und Applizieren eines Mischguts, insbesondere eines medizinischen Zements, umfassend eine Austragsöffnung und zumindest zwei Kartuschen, wobei die Kartuschen Innenräume umfassen, die bereichsweise durch einen Kartuschenkopf begrenzt sind, wobei die Kartuschen an den dem Kartuschenkopf gegenüberliegenden Seiten durch jeweils einen Förderkolben zum Austreiben der Ausgangskomponenten des Mischguts aus den Kartuschen begrenzt sind, wobei die Förderkolben beweglich im Innen-raum der Kartuschen angeordnet sind und wobei im Kartuschenkopf wenigstens jeweils eine Kartuschenöffnung zum Austreiben der Kartuscheninhalte aus den Kartuschen für jeden Innen-raum vorgesehen ist.

Die Erfindung betrifft auch ein Verfahren nach Anspruch 18 zum Synchronisieren von Strömen zumindest zweier Ausgangskomponenten für ein Mischgut mit einem solchen Kartuschensystem sowie ein Verfahren nach Anspruch 24 zum Mischen eines Mischguts mit einem solchen Kartuschensystem.

Unter einem "idealen Fluid" wird insbesondere eine Substanz verstanden, die einer beliebig langsamen Scherung keinen Widerstand entgegensetzt. Nachfolgend fallen unter den Begriff "Fluid" vor allem inkompressible Fluide. Unter dem Begriff "Fluidstrom" wird ein bewegtes, fließendes Fluid verstanden.

Bevorzugt werden weiterhin unter dem Begriff "Fluid" auch fließfähige Pasten verstanden. Eine Paste ist ein Feststoff-Flüssigkeitsgemisch (Suspension) mit einem hohen Gehalt an Feststoffen.

Pastenförmige Zweikomponentensysteme sind in der Technik weit verbreitet und werden für Dichtungen und Klebstoffe in großem Umfang hergestellt und in Industrie, Handwerk und im

Heimwerkerbereich eingesetzt. Daneben sind pastenförmige Zweikomponentensysteme im Bereich der Dentaltechnik üblich. In letzter Zeit wurden auch Versuche unternommen, pastenförmige Zweikomponenten-Polymethylmethacrylat-Knochenzement-Systeme zu entwickeln, wie beispielsweise aus der DE 10 2007 050 762 B3 bekannt. Gegenwärtig sind hierfür so genannte *side-by-side-*Kartuschen und Koaxial-Kartuschen technisch üblich.

Bei all diesen Zweikomponentensystemen ist das grundlegende Prinzip gleich, dass in jeweils einer Paste ein Initiator und in der anderen Paste ein Beschleuniger oder Härter enthalten ist. Die Pasten sind üblicherweise getrennt in separaten Kartuschen gelagert. Aus diesen Kartuschen werden die Pasten durch darin angebrachte Förderkolben in Richtung Kartuschenkopf durch Einwirkung von Stößeln gedrückt. Es kommt dabei darauf an, dass die den Pasten in dem vorbestimmten Volumenverhältnis aus den Kartuschen in statische Mischer gepresst werden, die jeweils am Kartuschenkopf angebracht sind. In den statischen Mischern vermischen sich die Pasten und die Aushärtungsreaktion setzt ein. Für die Qualität des ausgehärteten Pastenmaterials ist es wesentlich, dass das Volumenverhältnis der Pasten zueinander eingehalten wird. Am häufigsten liegt das Volumenverhältnis der Pasten im Bereich 1:1 bis 1:10. Das Volumenverhältnis wird einerseits durch die Dimensionierung der Kartuschen gewährleist und andererseits durch den synchronen Vortrieb der Förderkolben in den Kartuschen. Technisch wird dieser synchrone Vortrieb dadurch vorgenommen, dass die Förderkolben miteinander verbunden sind. Bei den meisten Zweikomponentensystemen sind die Förderkolben mit einer Zahnstange verbunden, die entweder durch Handkraft über Bedienhebel oder durch Motoren in Richtung des Kartuschenkopfs bewegt wird.

Daneben ist es auch möglich, Kartuschen mit Druckluft auszupressen. Dabei befindet sich in dem Kartuschensystem ein Förderkolben, der an der Außenseite zwei Stößel besitzt. Der Förderkolben wird beim Auspressen mit Druckluft beaufschlagt, wodurch sich dieser in Richtung Kartuschenkopf bewegt. Die an der Außenseite angebrachten Stößel drücken gleichzeitig auf die Kolben der Kartuschen. Weil beide Stößel mit dem Förderkolben verbunden sind, können sich diese nur synchron nach vorne in Richtung Kartuschenkopf bewegen.

Die Synchronisierung des Austrags ist deshalb wichtig, weil die Pasten üblicherweise nicht die exakt gleiche Viskosität besitzen. Deshalb würde eine einfache Druckbeaufschlagung mit Druckluft auf nicht synchronisierte Kolben dazu führen, dass bei der niedrig viskoseren Paste der Förderkolben schneller in Richtung Kartuschenkopf gedrückt würde als bei der im Vergleich höher viskosen Paste. Dadurch würde das vorgegebene Volumenverhältnis verändert. Das Ergebnis wäre ein nicht optimal ausgehärtetes Pastenmaterial.

Die direkte Beaufschlagung mit komprimierten Gas aus Druckluftleitungen oder auch aus konventionellen Druckgaspatronen, wie zum Beispiel Kohlendioxid-Patronen, hätte die Vorteile, dass sehr große Kräfte auf die Förderkolben einwirken würden, wodurch auch hoch viskose Pasten ausgepresst werden könnten, und dass der Auspressdruck und damit die Auspressgeschwindigkeit durch einfache Ventile gesteuert werden könnten, ohne das mechanische Vorrichtungen, wie Zahnstangen oder Getriebe, notwendig sind.

Besonders vorteilhaft wäre es für Anwendungen im OP-Bereich, wenn mit Druckgas ein Kartuschensystem / ein Applikator mit einem möglichst kleinen Volumen und mit einer maximalen Auspresskraft verwendet werden könnte, der eine schnelle und sichere Applikation von pastenförmigen Zweikomponenten-Polymethylmethacrylat-Knochenzementen ermöglichen würde. Dazu wäre es sinnvoll, wenn der Gasdruck direkt auf die Förderkolben in den Kartuschen einwirken könnte, ohne dass eine großvolumige Synchronisierung in Form von Förderkolben mit Stößeln notwendig wäre.

Ein gattungsgemäßes Kartuschensystem mit zwei Kartuschen und zwei miteinander verbundenen Förderkolben ist aus der US 4,260,077 A bekannt. Das Kartuschensystem ist im Prinzip wie zwei direkt nebeneinander liegende Spritzen aufgebaut. An der Spitze des Kartuschensystems ist eine gemeinsame Auslassöffnung für beide Kartuscheninhalte vorgesehen. Beim Auspressen der Inhalte werden die Förderkolben so weit in die Kartuschen gedrückt, bis die vorderen Enden der Förderkolben an die Kartuschenköpfe stoßen.

DE 85 29 804 U1 offenbart ein Kartuschensysten nach dem Oberbegriff des Anspruch 1 und offenbart eine Vorrichtung zum Dosieren und Mischen von zwei unterschiedlichen, pastösen oder niedrig bis höher viskosen Massen. Diese Massen werden über zwei mit gegenläufigen Stegen versehene Schnecken in eine Mischkammer gefördert, wobei die Schnecken durch eine gemeinsame Antriebswelle angetrieben werden.

Die WO 95/24556 A1 offenbart einen Dosieraufsatz mit Dosierrotoren, die eine Zahnradpumpe antreiben, mit der eine Beimischkomponente gepumpt wird. Die US 4,090,262 A1 offenbart eine Durchflussmengenmessung, bei der zwei Zahnräder in einem Rohr angeordnet sind, und durch deren Drehung die Durchflussmenge bestimmt wird. Eine Zahnradpumpe für Flüssigkeiten ist aus der DE 11 61 140 B bekannt.

Zusammenfassend kann festgestellt werden, dass der grundlegende Nachteil der bisher bekannten Kartuschensysteme beziehungsweise Applikatorensysteme für pastenförmige Mehrkomponentensysteme darin besteht, dass durch die zur Synchronisierung des Pastenaustrags miteinander verbundenen Förderkolben beziehungsweise Stößel der Platzbedarf der Applikatoren sehr groß ist, weil die verbundenen Förderkolben mindestens genauso lang sein müssen wie die Kartuschen, um einen weitgehenden Austrag der Pasten aus den Kartuschen durch Bewegung der Förderkolben in Richtung Kartuschenkopf zu ermöglichen. Die Förderkolben müssen bis zum Kartuschenkopf bewegt werden, damit die gesamte im Kartuschenvolumen enthaltende Paste in den statischen Mischer gedrückt werden kann.

Die Aufgabe der Erfindung besteht also darin, eine Vorrichtung zum Synchronisieren und Vermischen von pastenförmigen Fluiden zu entwickeln, die ein möglichst kleines Volumen besitzt und die es dennoch erlaubt, den Austrag von Pasten zu synchronisieren, so dass durch einfaches Beaufschlagen der Förderkolben in den Kartuschen mit komprimiertem Gas Ausgangskomponenten mit unterschiedlicher Viskosität in einem vorbestimmten Volumenverhältnis aus den Kartuschen zum Beispiel in einen statischen Mischer gepresst werden können. Es wäre auch vorteilhaft, wenn die Vorrichtung kompakter als die Kartuschen wäre. Eine weitere Aufgabe der Erfindung ist darin zu sehen, dass ein Verfahren bereitgestellt wird, das die Nachteile des Stands der Technik überwindet.

Die Aufgabe der Erfindung wird durch die Merkmale des Anspruchs 1 gelöst.

Ist an der Abflussöffnung keine weitere Einrichtung, wie eine Austragsrohr oder ein statischer Mischer angeordnet, so ist die Abflussöffnung auch gleichzeitig die Austragsöffnung im Sinne der vorliegenden Erfindung. Die Abflussöffnung kann also die Austragsöffnung des Kartuschensystems bilden.

Die Kopplung der Fördereinrichtungen kann durch Getriebe, Zahnriemen, Keilriemen oder sogar magnetische Kopplung der drehbaren Fördereinrichtungen erreicht werden.

Ein festlegbares Verhältnis der zu mischenden Ausgangskomponenten ist beispielsweise mit Hilfe von schaltbaren oder einstellbaren Getrieben möglich. Verschiedene Übersetzungen können dazu mit Zahnrädern und/oder Zahnriemen aufgebaut werden. Am einfachsten ist jedoch nur ein bestimmtes Verhältnis mit Hilfe zweier Zahnräder und/oder Zahnwalzen aufzubauen, deren Zähne direkt ineinander greifen.

Es ist auch vorstellbar, dass das Mischungsverhältnis der Ausgangskomponenten an der Abflussöffnung durch eine Einstellbarkeit der Kopplung einstellbar ist. Hierzu kann ein Knebelschalter oder ein Drehknopf an der Vorrichtung angeordnet sein, mit dem die Kopplung einstellbar ist.

Es kann erfindungsgemäß vorgesehen sein, dass die Vorrichtung zum Regeln von Strömen von Ausgangkomponenten aus den Kartuschen ein geschlossenes Gehäuse umfasst, das zumindest zwei Fluidverbindungen zwischen den Kartuschenöffnungen und der Abflussöffnung bereitstellt, wobei die Fördereinrichtungen in den Fluidverbindungen, insbesondere in unterschiedlichen Fluidverbindungen, angeordnet sind, so dass die Ausgangskomponenten durch sich drehenden Fördereinrichtungen zur Abflussöffnung förderbar sind.

Dabei kann vorgesehen sein, dass die Vorrichtung dicht, insbesondere fluiddicht, mit dem Kartuschenkopf abschließt, so dass zumindest zwei Kartuschenöffnungen fluiddicht mit der Abflussöffnung verbunden sind und dadurch fluiddichte Verbindungen vom Innenraum der Kartuschen bis zur Abflussöffnung, vorzugsweise bis zur Austragsöffnung, gebildet sind.

Dabei kann ferner vorgesehen sein, dass die Fördereinrichtungen, insbesondere die Zähne der Zahnräder und/oder Zahnwalzen, dicht mit den Innenwänden des Gehäuses abschließen.

Vorteilhafte Kartuschensysteme können sich auch dadurch auszeichnen, dass die Fördereinrichtungen Evolventenzahnräder und/oder Evolventenzahnwalzen, sind.

Besonders vorteilhaft ist es, wenn die Zähne der Zahnräder oder Zahnwalzen derart ineinander greifen, dass ein zwischen den Zähnen befindliches Material aus den Zwischenräumen herausgedrückt wird, wenn die Zähne ineinander greifen. Dazu können die Zahnräder oder Zahnwalzen derart aufgebaut und zueinander angeordnet sein, dass eine Evolventenverzahnung erzeugt wird. Der Abstand zwischen den Zähnen und die Form dieser Zwischenräume bestimmt die Menge des pro Umdrehung mitgeführten Materials. Das erzeugbare Mischungsverhältnis der Ausgangskomponenten ist also nicht nur über den Umfang der Zahnräder und/oder Zahnwalzen und die Anzahl der Zähne daran einstellbar sondern erfindungsgemäß auch über die Größe und Form der Zwischenräume der Zähne.

Es kann also auch erfindungsgemäß vorgesehen sein, dass das Volumen der Zwischenräume der Zähne eines ersten Zahnrads oder einer ersten Zahnwalze groß im Vergleich zu den Zwischenräumen der Zähne eines zweiten Zahnrads oder einer zweiten Zahnwalze ist.

Es ist vorgesehen, dass die Zähne der Zahnräder und/oder der Zahnwalzen ineinander greifen und dadurch miteinander gekoppelt sind, wobei die Kopplung durch eine Evolventenverzahnung der Zähne realisiert sein kann.

Besonders bevorzugt ist, dass die Kartuschen zylindrische *Side-by-side*-Kartuschen sind, bei denen die Kartuschen nebeneinander, insbesondere parallel zueinander, angeordnet sind.

Es ist erfindungsgemäß vorgesehen, dass die Kartuschen an den dem Kartuschenkopf gegenüberliegenden Seiten durch jeweils einen Förderkolben zum Austreiben der Ausgangskomponenten des Mischguts aus den Kartuschen begrenzt sind, wobei die Förderkolben beweglich im Innenraum der Kartuschen angeordnet sind und vorzugsweise durch eine von außen auf die Förderkolben wirkende Kraft die Ströme der Ausgangskomponenten aus den Kartuschen antreibbar sind.

Auch kann vorgesehen sein, dass die Innenräume der Kartuschen seitlich durch Wände, insbesondere durch Zylinderwände, bevorzugt durch Zylinderwände mit kreisförmigem Querschnitt, begrenzt sind, wobei der Kartuschenkopf dicht mit den Wänden abschließt.

Eine vorteilhafte Ausgestaltung der Erfindung sieht vor, dass an der Abflussöffnung ein Befestigungsmittel, insbesondere ein Gewinde für ein Austragsrohr, angeordnet ist.

Auch kann vorgesehen sein, dass an der Abflussöffnung ein Austragsrohr umfassend einen statischen Mischer und die Austragsöffnung angeordnet ist.

Die Erfindung sieht vor, dass zumindest eine der Fördereinrichtungen durch zumindest einen Strom der Ausgangskomponenten aus den Kartuschenöffnungen antreibbar ist.

Im Bereich der Kartuschenöffnungen ist zumindest ein Abweiser angeordnet ist, durch den zumindest einer der Ströme aus den Kartuschen auf einen Bereich der Fördereinrichtung leitbar ist und dadurch die Drehrichtung der Fördereinrichtungen vorgegeben ist.

Dabei kann vorgesehen sein, dass der Abweiser eine Abweiserfläche an der Außenseite des Kartuschenkopfs bildet, die größer ist als die zwischen den Drehachsen der Fördereinrichtungen gebildete Fläche parallel zur Abweiserfläche und dass die Abweiserfläche die Fläche zwischen den Drehachsen der Fördereinrichtung in Richtung senkrecht zum Kartuschenkopf vollständig überdeckt.

Die Erfindung lässt sich besonders einfach realisieren, wenn erfindungsgemäß vorgesehen ist, dass das Kartuschensystem zwei Kartuschen und zwei Fördereinrichtungen umfasst, insbesondere zwei Zahnräder oder zwei Zahnwalzen, wobei die Drehachsen der Zahnräder und/oder Zahnwalzen parallel zueinander angeordnet sind, oder das Kartuschensystem vier Kartuschen und vier Fördereinrichtungen umfasst.

Es kann ferner vorgesehen sein, dass die Drehachsen der Fördereinrichtungen parallel zur Kartuschenkopfoberfläche angeordnet sind.

Bezüglich eines Verfahrens wird die Aufgabe der Erfindung durch die Merkmale des Anspruchs 18 gelöst.

Dabei kann vorgesehen sein, dass die Ströme im Bereich der Abflussöffnung und/oder zwischen der Abflussöffnung und der Austragsöffnung gemischt werden, vorzugsweise unter Verwendung eines statischen Mischers.

Es ist vorgesehen, dass als Fördereinrichtungen Zahnräder und/oder Zahnwalzen verwendet werden, wobei die Ausgangskomponenten in den Zwischenräumen zwischen den Zähnen der Zahnräder und/oder Zahnwalzen transportiert werden.

Dabei ist vorgesehen, dass die Kopplung der Zahnräder und/oder Zahnwalzen durch Ineinandergreifen der Zähne der Zahnräder und/oder Zahnwalzen erzeugt wird, wobei insbesondere eine Evolventenverzahnung der Zahnräder und/oder Zahnwalzen verwendet wird.

Es kann auch vorgesehen sein, dass beim Ineinandergreifen der Zähne der Zahnräder und/oder Zahnwalzen die mitgeführten Ausgangskomponenten zwischen den Zähnen zumindest teilweise herausgepresst werden.

Erfindungsgemäße Verfahren können sich auch dadurch auszeichnen, dass zwei Ausgangskomponenten aus zwei Kartuschen gemischt werden, wobei zwei Fördereinrichtungen verwendet werden.

Die Aufgabe der Erfindung wird schließlich auch gelöst durch ein Verfahren nach Anspruch 24 zum Mischen eines Mischguts mit einem solchen Kartuschensystem, wobei das Kartuschensystem zum Mischen von strömenden pastenförmigen Klebstoffen, pastenförmigen Dichtstoffen, pastenförmigen Lebensmitteln, pastenförmigen Dentalmaterialien, pastenförmigen anorganischen Knochenzementen und/oder pastenförmigen Polymethylmethacrylat-Knochenzementen verwendet wird, insbesondere unter Verwendung eines erfindungsgemäßen Verfahrens.

Der Erfindung liegt die überraschende Erkenntnis zugrunde, dass durch eine einfache Kopplung drehbarer Fördereinrichtungen das Verhältnis der Winkelgeschwindigkeiten der Fördereinrichtungen zueinander einstellbar ist und so ein bestimmtes Mischungsverhältnis der Ausgangskomponenten einstellbar ist. Wenn die Ströme, also auch die Massenströme beziehungsweise die Volumenströme der Ausgangskomponenten aus den Kartuschen durch die Winkelgeschwindigkeiten der Fördereinrichtungen bestimmt sind, dann ist auch das Mischungsverhältnis der Ausgangskomponenten und damit des Mischguts durch die Kopplung festgelegt.

Wenn die Ausgangskomponenten unterschiedliche Materialeigenschaften, wie beispielsweise unterschiedliche Zähigkeit, aufweisen, wird dies zu unterschiedlichen Volumenströmen durch die Kartuschenöffnungen führen. Hierdurch werden unterschiedliche Kräfte auf die Fördereinrichtungen ausgeübt, die durch die Ströme angetrieben werden. Durch die Kopplung der Fördereinrichtungen treibt die Fördereinrichtung, auf die eine stärkere Kraft wirkt, die Fördereinrichtungen oder die Fördereinrichtung an, auf die eine schwächere Kraft wirkt oder auf die schwächere Kräfte wirken. Dadurch werden die stärkeren Ströme verlangsamt und die schwächeren Ströme verstärkt. Durch die feste Kopplung werden die Winkelgeschwindigkeiten der drehbaren Fördereinrichtungen also festgelegt und so stets die gewünschte Mischung erzeugt. Damit wird erreicht, dass sich schnell das gewünschte Mischungsverhältnis einstellt. Bei geeigneter Anpassung der Geometrie und der Reibungsverluste der Vorrichtung ist es also mit einem erfindungsgemäßen Kartuschensystem und mit den erfindungsgemäßen Verfahren leicht möglich, dass stets das gleiche Mischungsverhältnis unabhängig von der Viskosität der beiden Fluide erzielt wird.

Erfindungsgemäße Kartuschensysteme und Verfahren können zum Synchronisieren und Vermischen von strömenden pastenförmigen Klebstoffen, pastenförmigen Dichtstoffen, pastenförmigen Lebensmitteln, pastenförmigen Dentalmaterialien, pastenförmigen anorganischen Knochenzementen und pastenförmigen Polymethylmethacrylat-Knochenzementen verwendet werden.

Es ist auch erfindungsgemäß, einen Satz von Vorrichtungen mit unterschiedlichen Fördereinrichtungen und/oder unterschiedlichen Kopplungen für ein erfindungsgemäßes Kartuschensystem bereitzustellen, mit denen unterschiedliche vorgegebene Mischungsverhältnisse von Fluiden, insbesondere medizinischen Zementen, aus zwei oder mehr Kartuschen einstellbar sind.

Durch die drehbaren Fördereinrichtungen können erfindungsgemäße Kartuschensysteme kompakt und einfach aufgebaut werden. Es ist nicht notwendig die Fördereinrichtungen aus teuren Materialien aufzubauen, insbesondere dann nicht, wenn das Kartuschensystem nur zum einmaligen Gebrauch verwendet wird. Dies hat vor allem im medizinischen Bereich, zum Beispiel bei Kartuschensystemen für Knochenzemente, Vorteile, da wiederverwendete Kartuschensysteme aufwändig sterilisiert werden müssen.

Es kann also vorgesehen sein, dass die Fördereinrichtung und/oder das Gehäuse Kunststoffteile sind.

Im Folgenden werden Ausführungsbeispiele der Erfindung anhand einer schematisch dargestellten Figur erläutert, ohne jedoch dabei die Erfindung zu beschränken. Dabei zeigt:

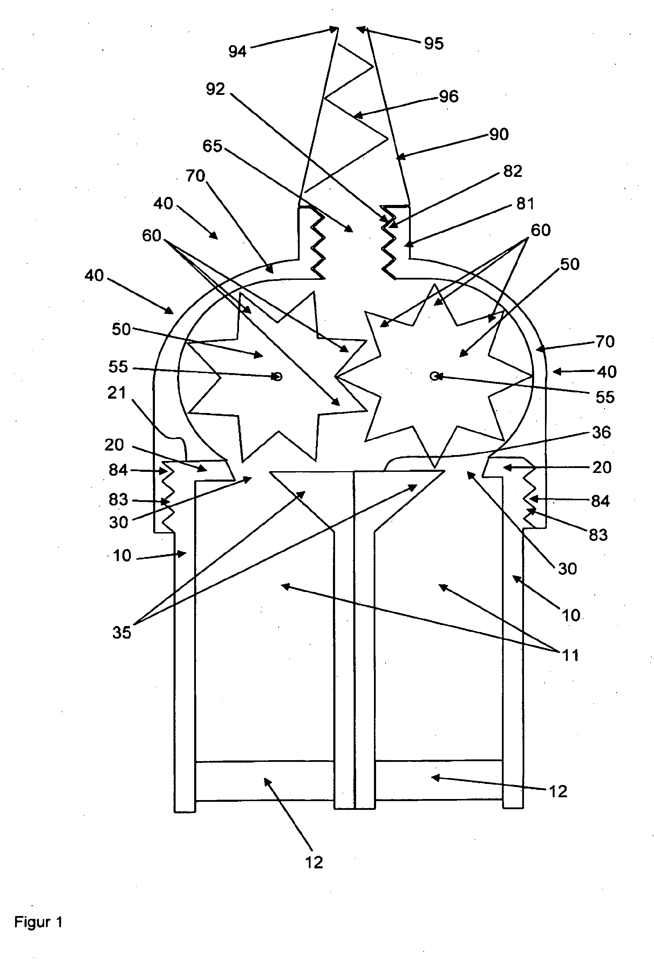

Figur 1: eine schematische Querschnittansicht eines erfindungsgemäßen Kartuschensystems.

Figur 1 zeigt eine schematische Querschnittansicht eines erfindungsgemäßen Kartuschensystems. Das Kartuschensystem umfasst zwei zylindrische Kartuschen (10), die jeweils einen Innenraum (11) umfassen, in denen die zu mischenden Ausgangskomponenten (beispielsweise Pasten, insbesondere medizinische Zemente) enthalten sind. Bodenseitig sind in den Kartuschen (10) zwei zylindrische Förderkolben (12) angeordnet, die mit den Innenwänden der Kartuschen (10) die Innenräume (11) dicht abschließen. Die Förderkolben (12) sind in Richtung der Zylinderachsen der Kartuschen (10) verschiebbar angeordnet.

An der den Förderkolben (12) gegenüberliegenden Seite der Kartuschen (10) sind beide Kartuschen durch einen Kartuschenkopf (20) abgeschlossen. Der Kartuschenkopf (20) ist auf der Oberseite durch eine Kartuschenkopfaußenfläche (21) begrenzt. Im Kartuschenkopf (20) befinden sich zwei Kartuschenöffnungen (30), die jeweils einen der Innenräume (11) der Kartuschen (10) kopfseitig öffnen. Wenn ein Gasdruck (zum Beispiel Druckluft oder das Gas aus einer CO₂-Patrone) bodenseitig an den Förderkolben (12) angelegt wird, werden die Förderkolben (12) in Richtung des Kartuschenkopfs (20) getrieben. Dadurch wird der Inhalt der Kartuschen (10) durch die Kartuschenöffnungen (30) gepresst. In der Mitte zwischen den beiden Kartuschenöffnungen (30) ist am Kartuschenkopf (20) ein keilförmiger Abweiser (35) angeordnet. Durch den Abweiser (35) werden die Ausgangskomponenten, die aus den Kartuschen (10) gedrückt werden, in bestimmte Richtungen gepresst. Dadurch können die Strömungen aus den Kartuschen (10) beziehungsweise den Kartuschenöffnungen (30) in bestimmte Richtungen gelenkt werden. Der Abweiser (35) hat eine Abweiserfläche (36), die einen Teil der Kartuschenkopfaußenfläche (21) bildet.

Oberhalb des Kartuschenkopfs (20) ist eine Vorrichtung (40) zum Regeln von Strömen von Ausgangskomponenten (nicht gezeigt) aus den Kartuschen (10) angeordnet. In der Vorrichtung sind zwei Zahnräder (50) über den Kartuschenöffnungen (30) angeordnet. Die Zahnräder (50) sind drehbar um Drehachsen (55) in der Vorrichtung (40) gelagert. Die Zahnräder (50) sind derart gelagert, dass die Zähne (60) der Zahnräder (50) ineinander greifen und dadurch miteinander gekoppelt sind. Besonders bevorzugt ist, dass die Zahnräder (50) eine Evolventenverzahnung bilden, da dann zum einen die Kraftübertragung der Zahnräder (50) stetig und gleichmäßig ist und zum anderen die Ausgangskomponenten, die zwischen den Zähnen (60) beziehungsweise in den Zahnzwischenräumen gefördert werden, das heißt transportiert werden, besonders effektiv aus diesen Zahnzwischenräumen herausgequetscht beziehungsweise herausgedrückt werden. Der Abweiser (35) sorgt dafür, dass die Ströme aus den Kartuschen (10) auf die äußeren Bereiche der Zahnräder (50) gelenkt werden. Dadurch werden das linke Zahnrad (50) im Uhrzeigersinn und das rechte Zahnrad (50) gegen den Uhrzeigersinn gedreht. Die Breite der Abweiserfläche (36) ist dazu größer als der Abstand der Achsen (55).

An der Oberseite der Vorrichtung (40) ist eine Abflussöffnung (65) für das gemischte Mischgut, beziehungsweise die gemischten Fluide vorgesehen. Um eine dichte Verbindung von den Kartuschenöffnungen (30) zu der Abflussöffnung (65) zu bilden, umfasst die Vorrichtung (40) ein Gehäuse (70). In den so gebildeten Verbindungen sind die Zahnräder (50) angeordnet. Die Zähne (60) der Zahnräder (50) bewegen sich dicht an den Innenwänden des Gehäuses (70), so dass möglichst wenig der Ausgangskomponenten sich an den Zähnen (60) vorbei durch die Verbindung zur Abflussöffnung drücken kann. Vorzugsweise schließen die Spitzen der Zähne (60) dicht mit den Innenwänden des Gehäuses ab. Die Zahnräder (50) beziehungsweise die Kanten der Zähne (60) können zu diesem Zweck aus einem flexiblen Material, wie beispielsweise einem Hartgummi oder einem weicheren Kunststoff, bestehen.

Die Abflussöffnung (65) ist in einem zylindrischen Stutzen (81) mit kreisförmiger Grundfläche angeordnet. Auf der Innenseite des Stutzens (81) ist ein Befestigungsmittel (82) in Form eines Innengewindes vorgesehen.

An der Unterseite der Vorrichtung (40) kann ein zweites Befestigungsmittel (83) angeordnet sein, das beispielsweise eine Rastung oder ein Innengewinde sein kann. Mit dem zweiten Befestigungsmittel (83) kann die Vorrichtung (40) an den Kartuschen (10) befestigt werden. Zu diesem Zweck umfassen die Kartuschen (10) ein drittes Befestigungsmittel (84), beispielsweise eine Gegenrastung oder ein Außengewinde, das in das Befestigungsmittel (83) der Vorrichtung (40) greift. Hierdurch wird erreicht, dass verschiedene Vorrichtungen mit unterschiedlichen Fördereinrichtungen zur Erzeugung unterschiedlicher Mischungsverhältnisse auf die Kartuschen aufsetzbar sind.

Das Innengewinde (82) des Stutzens (81) dient dazu, daran ein Austragsrohr (90) zu befestigen, dass ein Außengewinde (92) umfasst. Anstatt eines Innengewindes (82) und eines Außengewindes (92) kann das Austragsrohr (90) auch mit anderen Befestigungsmitteln an der Abflussöffnung (65) befestigt werden. Hierzu kommen insbesondere Rastungen, Schnappungen, Bajonettverschlüsse, Klebeverschlüsse, Klettverschlüsse und einfache Steckverbindungen in Frage, die einfach aufgebaut werden können, aber auch komplexere Befestigungsmittel, wie Flansche, sind möglich. Ebenso gut kann das Austragsrohr (90) auch fest mit dem Stutzen (81), beispielsweise einteilig, verbunden sein. An der oberen Spitze des Austragsrohrs (90) ist eine Austragsrohrspitze (94) angeordnet, mit der das Mischgut applizierbar ist. An der Austragsrohrspitze (94) ist eine Austragsöffnung (95) vorgesehen, durch die ein gemischtes Mischgut applizierbar ist. Zur besseren Durchmischung der Fluide ist in dem Austragsrohr (90) ein statischer Mischer (96) angeordnet.

Die im Austragsrohr (90) und der Abflussöffnung (65) gebildeten Öffnungen für das Mischgut sind bevorzugt größer als die Querschnitte der durch die Zähne (60) der Zahnräder (50) gebildeten Zwischenräume. Dies dient dazu, den größten Widerstand für die Strömung der Fluide an den Zähnen (60) der Zahnräder (50) zu generieren und deren Wirkung nicht durch einen Staudruck zu mindern.

Ein erfindungsgemäßes Verfahren lässt sich anhand des gezeigten Ausführungsbeispiels beispielsweise wie folgt schildern:
Auf die Förderkolben (12) wird ein Druck ausgeübt, indem beispielsweise ein Gasdruck angelegt wird. Die Förderkolben (12) bewegen sich in Richtung des Kartuschenkopfs (20) und pressen dadurch die Inhalte der Kartuschen (10), das heißt die Ausgangkomponenten des zu mischenden Mischguts, durch die Kartuschenöffnungen (30) in die Vorrichtung (40). Bei unterschiedlicher Fließfähigkeit der Ausgangskomponenten führt die gleiche Kraft auf den beiden Förderkolben (12) zunächst zu einem unterschiedlichen Vortrieb der Förderkolben (12) und damit zu unterschiedlichen Volumenströmen der Ausgangskomponenten aus den Kartuschen (10) durch die Kartuschenöffnungen (30).

Durch den Abweiser (35) werden die Ströme auf die äußeren Bereiche der Zahnräder (50) gelenkt, so dass das linke Zahnrad (50) im Uhrzeigersinn und das rechte Zahnrad (50) gegen den Uhrzeigersinn gedreht werden. Die Ausgangskomponenten werden in die Zwischenräume zwischen den Zähnen (60) geleitet und durch die Drehung der Zahnräder (50) in Richtung der Abflussöffnung (65) aus der Vorrichtung (40) gefördert. Durch die unterschiedlichen Volumenströme, das heißt durch das unterschiedliche Volumen der Ausgangskomponenten, das pro Zeiteinheit in die Fördereinrichtungen (50) gedrückt wird, werden die beiden Fördereinrichtungen (50) unterschiedlich stark angetrieben, das heißt gedreht. Mit jeder Drehung der Fördereinrichtungen (50), also der Zahnräder (50) wird eine bestimmte Menge der Ausgangskomponenten zur Abflussöffnung transportiert. Da die Abstände und Größen der Zwischenräume zwischen den Zähnen (60) bei beiden Zahnrädern (50) gleich groß sind, werden also bei einer Umdrehung auch die gleichen Volumina der Ausgangkomponenten gefördert.

Durch das Ineinandergreifen der Zähne (60) der Fördereinrichtungen (50) können sie sich aber nur gleich schnell drehen, so dass ausgeschlossen ist, dass eine leichtflüssigere Ausgangkomponente schneller gefördert wird als eine zähflüssigere Ausgangskomponenten. Es werden sich also keine unterschiedlich starken Volumenströme einstellen können, da der stärkere Volumenstrom gebremst und der langsamere Volumenstrom durch die Kopplung gefördert wird.

Durch die Kopplung der Zahnräder (50) durch Ineinandergreifen ihrer Zähne (60) kann also nur ein fest vorgegebenes Mischungsverhältnis der Ausgangskomponenten erzeugt werden. Die Energie zum Vortrieb der Ausgangskomponenten und zum Drehen der Fördereinrichtungen (50) wird dem Druck auf die Förderkolben (12) entnommen. Die Ausgangskomponenten übertragen dazu die Kraft auf die Fördereinrichtungen (50).

Die erzeugte Mischung wird durch die Abflussöffnung (65) in das Austragsrohr (90) gedrückt und dort mit Hilfe des statischen Mischers (96) durchmischt, um eine bessere Durchmischung der Ausgangskomponenten zu erreichen. Die Energie hierfür muss ebenfalls durch den Druck auf die Förderkolben (12) aufgebracht werden. Nach ausreichender Durchmischung kann das so erzeugte Mischgut durch die Austragsöffnung (95) an der Austragsrohrspitze (94) appliziert werden.

Durch Zwischenräume zwischen den Zähnen (60) mit anderen Volumina, die diese zwischen den Innenwänden des Gehäuses (70) einschließen, und/oder durch andere Durchmesser der drehbaren Zahnräder (50) lassen sich andere Mischungsverhältnisse der beiden Ausgangskomponenten erzielen.

Die gezeigte Vorrichtung (40) ist vorliegend nur deshalb schematisch so groß gezeichnet, damit die Zeichnung übersichtlich ist. Die Erfindung ist vorzugsweise durch eine im Vergleich zu der Größe der Kartuschen (10) und im Vergleich zur Größe des Austragsrohrs (90) viel kleinere Vorrichtung (40) realisierbar. Dies verhindert größere Totvolumina zu Beginn des Mischverfahrens und macht die gesamte Vorrichtung kleiner und dadurch kompakter. Das Austragsrohr (90) ist vorliegend aufschraubbar, damit eine noch kompaktere Bauweise und damit Lagerung des gesamten Kartuschensystems ermöglicht wird. Ebenso könnte ein schwenkbar gelagertes Austragsrohr (90) vorgesehen sein.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 10: Kartusche
- 11: Innenraum
- 12: Förderkolben
- 20: Kartuschenkopf
- 21: Kartuschenkopfaußenfläche
- 30: Kartuschenöffnung
- 35: Abweiser
- 36: Abweiserfläche
- 40: Vorrichtung
- 50: Fördereinrichtung / Zahnrad
- 55: Achse
- 60: Zahnradzahn
- 65: Abflussöffnung
- 70: Gehäuse
- 81: Stutzen
- 82, 83: Befestigungsmittel / Innengewinde
- 84: Befestigungsmittel / Außengewinde
- 90: Austragsrohr
- 92: Befestigungsmittel / Außengewinde
- 94: Austragsrohrspitze
- 95: Austragsöffnung
- 96: statischer Mischer

## Patentansprüche

1. Kartuschensystem zum Mischen und Applizieren eines Mischguts, insbesondere eines medizinischen Zements, umfassend eine Austragsöffnung (95) und zumindest zwei Kartuschen (10), wobei die Kartuschen (10) Innenräume (11) umfassen, die bereichsweise durch einen Kartuschenkopf (20) begrenzt sind, wobei die Kartuschen (10) an den dem Kartuschenkopf (20) gegenüberliegenden Seiten durch jeweils einen Förderkolben (12) zum Austreiben der Ausgangskomponenten des Mischguts aus den Kartuschen (10) begrenzt sind, wobei die Förderkolben (12) beweglich im Innenraum (11) der Kartuschen (10) angeordnet sind und wobei im Kartuschenkopf (20) wenigstens jeweils eine Kartuschenöffnung (30) zum Austreiben der Kartuscheninhalte aus den Kartuschen (10) für jeden Innenraum (11) vorgesehen ist,
wobei am Kartuschenkopf (20) eine Vorrichtung (40) zum Regeln von Strömen von Ausgangskomponenten aus den Kartuschen (10) angeordnet ist, umfassend eine Abflussöffnung (65) und zumindest zwei Fördereinrichtungen (50) zum Fördern der Ausgangskomponenten zur Abflussöffnung (65), wobei jede Fördereinrichtung (50) eine Verbindung zu einem Innenraum (11) einer Kartusche (10) aufweist, die wenigstens eine Kartuschenöffnung (30) umfasst, die Fördereinrichtungen (50) drehbar in der Vorrichtung (40) angeordnet sind, wobei durch die Winkelgeschwindigkeiten der Fördereinrichtungen (50) die Volumenströme der Ausgangskomponenten bestimmt sind, und die Fördereinrichtungen (50) derart miteinander gekoppelt sind, dass das Verhältnis der Winkelgeschwindigkeiten der Fördereinrichtungen (50) relativ zueinander festgelegt ist oder festlegbar ist, so dass ein bestimmtes Mischungsverhältnis der Ausgangskomponenten an der Abflussöffnung (65) erzeugbar ist, **dadurch gekennzeichnet, dass**
zumindest eine der Fördereinrichtungen (50) durch zumindest einen Strom der Ausgangskomponenten aus den Kartuschenöffnungen (30) antreibbar ist, wobei die Fördereinrichtungen (50) Zahnräder (50) und/oder Zahnwalzen sind und in Zwischenräumen zwischen den Zähnen (60) der Zahnräder (50) und/oder der Zahnwalzen die Ausgangskomponenten förderbar sind, wobei die Zähne (60) der Zahnräder (50) und/oder der Zahnwalzen ineinander greifen und dadurch die Fördereinrichtungen (50) miteinander gekoppelt sind und wobei
im Bereich der Kartuschenöffnungen (30) zumindest ein Abweiser (35) angeordnet ist, durch den zumindest einer der Ströme aus den Kartuschen (10) auf einen Bereich der Zahnräder (50) und/oder Zahnwalzen leitbar ist und dadurch die Drehrichtung der Zahnräder (50) und/oder Zahnwalzen vorgegeben ist.

2. Kartuschensystem nach Anspruch 1, **dadurch gekennzeichnet, dass** die Vorrichtung (40) zum Regeln von Strömen von Ausgangskomponenten aus den Kartuschen (10) ein geschlossenes Gehäuse (70) umfasst, das zumindest zwei Fluidverbindungen zwischen den Kartuschenöffnungen (30) und der Abflussöffnung (65) bereitstellt, wobei die Fördereinrichtungen (50) in den Fluidverbindungen, insbesondere in unterschiedlichen Fluidverbindungen, angeordnet sind, so dass die Ausgangskomponenten durch sich drehenden Fördereinrichtungen (50) zur Abflussöffnung (65) förderbar sind.

3. Kartuschensystem nach Anspruch 2, **dadurch gekennzeichnet, dass** die Vorrichtung (40) dicht, insbesondere fluiddicht, mit dem Kartuschenkopf (20) abschließt, so dass zumindest zwei Kartuschenöffnungen (30) fluiddicht mit der Abflussöffnung (65) verbunden sind und dadurch fluiddichte Verbindungen vom Innenraum der Kartuschen (10) bis zur Abflussöffnung (65), vorzugsweise bis zur Austragsöffnung (95), gebildet sind.

4. Kartuschensystem nach einem der vorangehenden Ansprüche, **dadurch gekennzeichnet, dass**
die Fördereinrichtungen (50) Evolventenzahnräder und/oder Evolventenzahnwalzen sind.

5. Kartuschensystem nach einem der vorangehenden Ansprüche, **dadurch gekennzeichnet, dass**
die Kopplung vorzugsweise durch eine Evolventenverzahnung der Zähne (60) realisiert ist.

6. Kartuschensystem nach einem der vorangehenden Ansprüche, **dadurch gekennzeichnet, dass**
das Volumen der Zwischenräume der Zähne (60) eines ersten Zahnrads (50) oder einer ersten Zahnwalze groß im Vergleich zu den Zwischenräumen der Zähne (60) eines zweiten Zahnrads (50) oder einer zweiten Zahnwalze ist.

7. Kartuschensystem nach einem der vorangehenden Ansprüche, **dadurch gekennzeichnet, dass**
die Kartuschen (10) zylindrische *Side-by-side*-Kartuschen (10) sind, bei denen die Kartuschen (10) nebeneinander angeordnet sind.

8. Kartuschensystem nach Anspruch 7, **dadurch gekennzeichnet, dass** die Kartuschen (10) parallel zueinander angeordnet sind

9. Kartuschensystem nach einem der vorangehenden Ansprüche, **dadurch gekennzeichnet, dass**
durch eine von außen auf die Förderkolben (12) wirkende Kraft die Ströme der Ausgangskomponenten aus den Kartuschen (10) antreibbar sind.

10. Kartuschensystem nach einem der vorangehenden Ansprüche, **dadurch gekennzeichnet, dass**
die Innenräume (11) der Kartuschen (10) seitlich durch Wände, insbesondere durch Zylinderwände, bevorzugt durch Zylinderwände mit kreisförmigem Querschnitt, begrenzt sind, wobei der Kartuschenkopf (20) dicht mit den Wänden abschließt.

11. Kartuschensystem nach einem der vorangehenden Ansprüche, **dadurch gekennzeichnet, dass**
an der Abflussöffnung (65) ein Befestigungsmittel (82), insbesondere ein Gewinde (82), für ein Austragsrohr (90) angeordnet ist.

12. Kartuschensystem nach einem der vorangehenden Ansprüche, **dadurch gekennzeichnet, dass**
an der Abflussöffnung (65) ein Austragsrohr (90) umfassend einen statischen Mischer (96) und die Austragsöffnung (95) angeordnet ist.

13. Kartuschensystem nach einem der vorangehenden Ansprüche, **dadurch gekennzeichnet, dass**
im Bereich der Kartuschenöffnungen (30) zumindest ein Abweiser (35) angeordnet ist, durch den zumindest einer der Ströme aus den Kartuschen (10) auf einen Bereich der Fördereinrichtung (50) leitbar ist und dadurch die Drehrichtung der Fördereinrichtungen (50) vorgegeben ist.

14. Kartuschensystem nach Anspruch 13, **dadurch gekennzeichnet, dass** der Abweiser (35) eine Abweiserfläche (36) an der Außenseite des Kartuschenkopfs (20) bildet, die größer ist als die zwischen den Drehachsen (55) der Fördereinrichtungen (50) gebildete Fläche parallel zur Abweiserfläche (36) und dass die Abweiserfläche (36) die Fläche zwischen den Drehachsen (55) der Fördereinrichtung (50) in Richtung senkrecht zum Kartuschenkopf (20) vollständig überdeckt.

15. Kartuschensystem nach einem der Ansprüche 2 bis 14, **dadurch gekennzeichnet, dass** die Fördereinrichtungen (50), insbesondere die Zähne (60) der Zahnräder (50) und/oder Zahnwalzen, dicht mit den Innenwänden des Gehäuses (70) abschließen.

16. Kartuschensystem nach einem der vorangehenden Ansprüche, **dadurch gekennzeichnet, dass**
das Kartuschensystem zwei Kartuschen (10) und zwei Fördereinrichtungen (50) umfasst, insbesondere zwei Zahnräder (50) oder zwei Zahnwalzen, wobei die Drehachsen (55) der Zahnräder (50) und/oder Zahnwalzen parallel zueinander angeordnet sind, oder das Kartuschensystem vier Kartuschen (10) und vier Fördereinrichtungen (50) umfasst.

17. Kartuschensystem nach einem der vorangehenden Ansprüche, **dadurch gekennzeichnet, dass**
die Drehachsen (55) der Fördereinrichtungen (50) parallel zur Kartuschenkopfoberfläche (21) angeordnet sind.

18. Verfahren zum Synchronisieren von Strömen zumindest zweier Ausgangskomponenten für ein Mischgut mit einem Kartuschensystem nach einem der Ansprüche 1 bis 17, das dadurch charakterisiert ist, dass
zumindest zwei Ausgangskomponenten aus den zumindest zwei Kartuschen durch die Kartuschenöffnungen gedrückt werden,
die Ausgangkomponenten in die Fördereinrichtungen gedrückt werden,
die Fördereinrichtungen durch die Ströme der Ausgangskomponenten angetrieben werden,
der Strom, insbesondere der Volumenstrom, der geförderten Ausgangskomponenten zur Abflussöffnung durch die Winkelgeschwindigkeit der Fördereinrichtungen bestimmt wird, durch die Kopplung der Fördereinrichtungen eine Kraft von zumindest einer Fördereinrichtung auf zumindest eine andere Fördereinrichtung übertragen wird und
die Kopplung derart eingestellt wird, dass bestimmte Mischungsverhältnisse der Ausgangskomponenten an der Abflussöffnung erzielt werden.

19. Verfahren nach Anspruch 18, **dadurch gekennzeichnet, dass**
die Ströme im Bereich der Abflussöffnung und/oder zwischen der Abflussöffnung und der Austragsöffnung gemischt werden, vorzugsweise unter Verwendung eines statischen Mischers.

20. Verfahren nach Anspruch 18 oder 19, **dadurch gekennzeichnet, dass** als Fördereinrichtungen Zahnräder und/oder Zahnwalzen verwendet werden, wobei die Ausgangskomponenten in den Zwischenräumen zwischen den Zähnen der Zahnräder und/oder Zahnwalzen transportiert werden.

21. Verfahren nach Anspruch 20, **dadurch gekennzeichnet, dass** die Kopplung der Zahnräder und/oder Zahnwalzen durch Ineinandergreifen der Zähne der Zahnräder und/oder Zahnwalzen erzeugt wird, wobei insbesondere eine Evolventenverzahnung der Zahnräder und/oder Zahnwalzen verwendet wird.

22. Verfahren nach Anspruch 20 oder 21, **dadurch gekennzeichnet, dass** beim Ineinandergreifen der Zähne der Zahnräder und/oder Zahnwalzen die mitgeführten Ausgangskomponenten zwischen den Zähnen zumindest teilweise herausgepresst werden.

23. Verfahren nach einem der Ansprüche 18 bis 22, **dadurch gekennzeichnet, dass** zwei Ausgangskomponenten aus zwei Kartuschen gemischt werden, wobei zwei Fördereinrichtungen verwendet werden.

24. Verfahren zum Mischen eines Mischguts mit einem Kartuschensystem nach einem der Ansprüche 1 bis 17, **dadurch gekennzeichnet, dass**
das Kartuschensystem zum Mischen von strömenden pastenförmigen Klebstoffen, pastenförmigen Dichtstoffen, pastenförmigen Lebensmitteln, pastenförmigen Dentalmaterialien, pastenförmigen anorganischen Knochenzementen und/oder pastenförmigen Polymethylmethacrylat-Knochenzementen verwendet wird, insbesondere unter Verwendung eines Verfahrens nach einem der Ansprüche 18 bis 23.

## Claims

1. Cartridge system for mixing and applying a mixed material, particularly a medical cement, comprising a discharge opening (95) and at least two cartridges (10), wherein the cartridges (10) comprise interior spaces (11), which are delimited, in certain regions, by a cartridge head (20), wherein the cartridges (10) are delimited, at the sides that lie opposite the cartridge head (20), by a conveying piston (12), in each instance, for driving the starting components of the mixed material out of the cartridges (10), wherein the conveying pistons (12) are movably disposed in the interior space (11) of the cartridges (10), and wherein at least one cartridge opening (30), in each instance, for driving the cartridge contents out of the cartridges (10), is provided in the cartridge head (20) for each interior space (11),
wherein an apparatus (40) for regulating streams of starting components coming out of the cartridges (10) is disposed on the cartridge head (20), comprising an outflow opening (65) and at least two conveying devices (50) for conveying the starting components to the outflow opening (65), wherein each conveying device (50) has a connection to an interior space (11) of a cartridge (10), which device comprises at least one cartridge opening (30), the conveying devices (50) are disposed rotatable in the apparatus (40), wherein the volume streams of the starting components are determined by the angular velocities of the conveying devices (50), and the conveying devices (50) are connected with one another in such a manner that the ratio of the angular velocities of the conveying devices (50) relative to one another is established or can be established, so that a specific mixture ratio of the starting components can be produced at the outflow opening (65), **characterized in that**
at least one of the conveying devices (50) can be driven by at least one stream of the starting components coming out of the cartridge openings (30), wherein the conveying devices (50) are gear wheels (50) and/or gear rollers, and the starting components can be conveyed between the teeth (60) of the gear wheels (50) and/or of the gear rollers, wherein the teeth (60) of the gear wheels (50) and/or of the gear rollers engage into one another and thereby the conveying devices (50) are coupled with one another, and wherein
at least one deflector (35) is provided in the region of the cartridge openings (30), by means of which deflector (35) at least one of the streams from the cartridges (10) can be guided onto a region of the gear wheels (50) and/or gear rollers, and thereby the direction of rotation of the gear wheels (50) and/or gear rollers is predetermined.

2. Cartridge system according to claim 1, **characterized in that** the apparatus (40) for regulating streams of starting components coming out of the cartridges (10) comprises a closed housing (70) that makes available at least two fluid connections between the cartridge openings (30) and the outflow opening (65), wherein the conveying devices (50) are disposed in the fluid connections, particularly in different fluid connections, so that the starting components can by conveyed to the outflow opening (65) by means of rotating conveying devices (50).

3. Cartridge system according to claim 2, **characterized in that** the apparatus (40) ends in sealed manner, particularly in fluid-sealed manner, with the cartridge head (20), so that at least two cartridge openings (30) are connected with the outflow opening (65) in fluid-sealed manner, and thereby fluid-sealed connections are formed from the interior space of the cartridges (10) all the way to the outflow opening (65), preferably all the way to the discharge opening (95).

4. Cartridge system according to one of the preceding claims, **characterized in that**
the conveying devices (50) are involute gear wheels and/or involute gear rollers.

5. Cartridge system according to one of the preceding claims, **characterized in that**
coupling is preferably implemented by means of involute meshing of the teeth (60).

6. Cartridge system according to one of the preceding claims, **characterized in that**
the volume of the interstices between the teeth (60) of a first gear wheel (50) or of a first gear roller is large in comparison with the interstices between the teeth (60) of a second gear wheel (50) or of a second gear roller.

7. Cartridge system according to one of the preceding claims, **characterized in that**
the cartridges (10) are cylindrical side-by-side cartridges (10), in which the cartridges (10) are disposed next to one another.

8. Cartridge system according to claim 7, **characterized in that** the cartridges (10) are disposed parallel to one another.

9. Cartridge system according to one of the preceding claims, **characterized in that**
the streams of the starting components can be driven out of the cartridges (10) by means of a force that acts on the conveying pistons (12) from the outside.

10. Cartridge system according to one of the preceding claims, **characterized in that**
the interior spaces (11) of the cartridges (10) are delimited laterally by walls, particularly by cylindrical walls especially having a circular cross-section, wherein the cartridge head (20) ends with the walls in sealed manners.

11. Cartridge system according to one of the preceding claims, **characterized in that**
an attachment means (82), particularly a thread (82) for a discharge pipe (90) is disposed at the outflow opening (65).

12. Cartridge system according to one of the preceding claims, **characterized in that**
a discharge pipe (90) comprising a static mixer (96) and the discharge opening (95) is disposed at the outflow opening (65).

13. Cartridge system according to one of the preceding claims, **characterized in that**
at least one deflector (35) is disposed in the region of the cartridge openings (30), by means of which deflector at least one of the streams coming out of the cartridges (10) can be conducted onto a region of the conveying device (50), and thereby the direction of rotation of the conveying devices (50) is predetermined.

14. Cartridge system according to claim 13, **characterized in that**
the deflector (35) forms a deflector surface (36) on the outside of the cartridge head (20), which surface is larger than the surface formed between the axes of rotation (55) of the conveying devices (50), parallel to the deflector surface (36), and that the deflector surface (36) completely covers the surface between the axes of rotation (55) of the conveying device (50) in the direction perpendicular to the cartridge head (20).

15. Cartridge system according to one of claims 2 to 14, **characterized in that** the conveying devices (50), particularly the teeth (60) of the gear wheels (50) and/or gear rollers end with the interior walls of the housing (70), in sealed manner.

16. Cartridge system according to one of the preceding claims, **characterized in that**
the cartridge system comprises two cartridges (10) and two conveying devices (50), particularly two gear wheels (50) or two gear rollers, wherein the axes of rotation (55) of the gear wheels (50) and/or gear rollers are disposed parallel to one another, or that the cartridge system comprises four cartridges (10) and four conveying devices (50).

17. Cartridge system according to one of the preceding claims, **characterized in that**
the axes of rotation (55) of the conveying devices (50) are disposed parallel to the cartridge head surface (21).

18. Method for synchronizing streams of at least two starting components for a mixed material, using a cartridge system according to one of claims 1 to 17, **characterized in that**
at least two starting components are pressed out of the at least two cartridges, through the cartridge openings,
the starting components are pressed into the conveying devices,
the conveying devices are driven by the streams of the starting components,
the stream, particularly the volume stream of the conveyed starting components to the outflow opening is determined by the angular velocity of the conveying devices,
a force is transferred from at least one conveying device to at least one other conveying device, by means of the coupling of the conveying devices, and
the coupling is adjusted in such a manner that specific mixture ratios of the starting components are achieved at the outflow opening.

19. Method according to claim 18, **characterized in that** the streams are mixed in the region of the outflow opening and/or between the outflow opening and the discharge opening, preferably using a static mixer.

20. Method according to claim 18 or 19, **characterized in that** gear wheels and/or gear rollers are used as conveying devices, wherein the starting components are transported into the interstices between the teeth of the gear wheels and/or gear rollers.

21. Method according to claim 20, **characterized in that** the coupling of the gear wheels and/or gear rollers is produced by means of engagement of the teeth of the gear wheels and/or gear rollers into one another, wherein, in particular, an involute gearing of the gear wheels and/or gear rollers is used.

22. Method according to claim 20 or 21, **characterized in that** when the teeth of the gear wheels and/or gear rollers engage into one another, the starting components that are entrained are pressed out, at least in part, of between the teeth.

23. Method according to one of claims 18 to 22, **characterized in that** two starting components coming out of two cartridges are mixed, wherein two conveying devices are used.

24. Method for mixing a mixed material using a cartridge system according to one of claims 1 to 17, **characterized in that**
the cartridge system is used to mix flowing pasty adhesives , pasty sealants, pasty foods, pasty dental materials, pasty inorganic bone cements and/or pasty polymethylmethacrylate bone cement, in particular, by applying a method according to any of claims 18 to 23.

## Revendications

1. Système de cartouches pour le mélange et l'application d'un produit mélangé, notamment un ciment médical, comprenant un orifice de sortie (95) et au moins deux cartouches (10), où les cartouches (10) comprennent des chambres intérieures (11) qui sont partiellement délimitées par une tête de cartouche (20), où les cartouches (10) sont délimitées au niveau des côtés situés en face de la tête de cartouche (20) par, chaque fois, un piston de transport (12) pour évacuer hors des cartouches (10) les composants de départ du produit mélangé, où les pistons de transport (12) sont disposés mobiles dans la chambre intérieure (11) des cartouches (10) et où au moins un orifice de cartouche (30) est prévu pour chaque chambre intérieure (11) pour l'évacuation du contenu de la cartouche hors des cartouches (10),
où un dispositif (40) est agencé sur la tête de cartouche (20) pour le réglage du flux des composants de départ hors des cartouches (10), comprenant un orifice d'écoulement (65) et au moins deux dispositifs de transport (50) pour le transport des composants de départ vers l'orifice d'écoulement (65), où chaque dispositif de transport (50) présente une communication vers une chambre intérieure (11) d'une cartouche (10) qui comprend au moins un orifice de cartouche (30), les dispositifs de transport (50) étant agencés dans le dispositif (40) en pouvant tourner, où les flux volumiques des composants de départ sont déterminés par les vitesses angulaires des dispositifs de transport (50), et les dispositifs de transport (50) sont couplés ensemble de telle façon que le rapport des vitesses angulaires des dispositifs de transport (50) relatives les unes par rapport aux autres est fixe, ou peut être fixé, de sorte qu'un rapport de mélange défini des composants de départ peut être créé à l'orifice d'écoulement (65), **caractérisé en ce**
**qu'**au moins l'un des dispositifs de transport (50) peut être entraîné hors des orifices de cartouche (30) par au moins un flux des composants de départ, où les dispositifs de transport (50) sont des engrenages (50) et/ou des rouleaux dentés et les composants de départ peuvent être transportés dans des espaces interstitiels entre les dents (60) des engrenages (50) et/ou des rouleaux dentés, où les dents (60) des engrenages (50) et/ou des rouleaux dentés sont emboitées les unes dans les autres et ce par quoi les dispositifs de transports (50) sont couplés ensemble et où
au moins un déflecteur (35) est disposé dans la zone des orifices de cartouche (30) par lequel au moins l'un des flux provenant des cartouches (10) peut être mené sur la région des engrenages (50) et/ou des rouleaux dentés et ainsi le sens de rotation des engrenages (50) et/ou des rouleaux dentés se trouve défini.

2. Système de cartouches selon la revendication 1, **caractérisé en ce que** le dispositif (40) comprend un boîtier (70) fermé pour le réglage du flux des composants de départ provenant des cartouches (10), qui met à disposition au moins deux connexions de fluide entre les orifices de cartouche (30) et l'orifice d'écoulement (65), où les dispositifs de transport (50) sont disposés dans les connexions de fluide, notamment dans des connexions de fluide souterraines, de sorte que les composants de départ peuvent être transportés par des dispositifs de transport (50) rotatifs vers l'orifice d'écoulement (65).

3. Système de cartouches selon la revendication 2, **caractérisé en ce que** le dispositif (40) se ferme de manière étanche, notamment étanche aux fluides, avec la tête de cartouche (20) de sorte qu'au moins deux orifices de cartouche (30) sont reliés de manière étanche aux fluides avec l'orifice d'écoulement (65) et que de cette façon des liaisons étanches aux fluides sont formées à partir de la chambre intérieure des cartouches (10) jusqu'à l'orifice d'écoulement (65), de préférence jusqu'à l'orifice de sortie (95).

4. Système de cartouches selon l'une des revendications précédentes, **caractérisé en ce que**
les dispositifs de transport (50) sont des engrenages en développante et/ou des rouleaux dentés en développante.

5. Système de cartouches selon l'une des revendications précédentes, **caractérisé en ce que**
le couplage est de préférence réalisé par une denture en développante des dents (60).

6. Système de cartouches selon l'une des revendications précédentes, **caractérisé en ce que**
le volume des espaces interstitiels des dents (60) d'un premier engrenage (50) ou d'un premier rouleau denté est grand en comparaison des espaces interstitiels des dents (60) d'un deuxième engrenage (50) ou d'un deuxième rouleau denté.

7. Système de cartouches selon l'une des revendications précédentes, **caractérisé en ce que**
les cartouches (10) sont des cartouches cylindrique *Side-by-side* (10), chez lesquelles les cartouches (10) sont disposées l'une à côté de l'autre.

8. Système de cartouches selon la revendication 7, **caractérisé en ce que** les cartouches sont disposées parallèles l'une à l'autre.

9. Système de cartouches selon l'une des revendications précédentes, **caractérisé en ce que**
les flux des composants de départ sont entraînés hors des cartouches (10) par une force agissant de l'extérieur sur les pistons de transport (12).

10. Système de cartouches selon l'une des revendications précédentes, **caractérisé en ce que**
les chambres internes (11) des cartouches (10) sont délimitées latéralement par des parois, notamment des parois cylindriques, de préférence par des parois cylindriques avec une section transversale en forme de cercle, où la tête de cartouche (20) se ferme de manière étanche avec les parois.

11. Système de cartouches selon l'une des revendications précédentes, **caractérisé en ce**
**qu'**un moyen de fixation (82), notamment un filetage (82) pour la conduite d'évacuation (90) est agencé sur l'orifice d'écoulement (65).

12. Système de cartouches selon l'une des revendications précédentes, **caractérisé en ce**
**qu'**une conduite d'évacuation (90), comprenant un mélangeur statique (96) et l'orifice de sortie (95), est disposée sur l'orifice d'écoulement (65).

13. Système de cartouches selon l'une des revendications précédentes, **caractérisé en ce**
**qu'**au moins un déflecteur (35) est disposé dans la zone des orifices de cartouche (30), par lequel au moins l'un des flux provenant des cartouches (10) peut être guidé sur une zone du dispositif de transport (50) et qu'ainsi le sens de rotation des dispositifs de transport (50) est prédéterminé.

14. Système de cartouches selon la revendication 13, **caractérisé en ce que** le déflecteur (35) forme une surface déflectrice (36) sur la face extérieure de la tête de cartouche (20) qui est plus grande que la surface formée entre les axes de rotation (55) des dispositifs de transport (50), parallèle à la surface déflectrice (36), et que la surface déflectrice (36) recouvre totalement la surface entre les axes de rotation (55) du dispositif de transport (50) dans la direction perpendiculaire à la tête de cartouche (20).

15. Système de cartouches selon l'une des revendications 2 à 14, **caractérisé en ce que**
les systèmes de transport (50), notamment les dents (60) des engrenages (50) et/ou des rouleaux dentés, se ferment de manière étanche avec les parois intérieures du boitier (70).

16. Système de cartouches selon l'une des revendications précédentes, **caractérisé en ce que**
le système de cartouches comprend deux cartouches (10) et deux dispositifs de transport (50), notamment deux engrenages (50) ou deux rouleaux dentés, où les axes de rotation (55) des engrenages (50) et/ou des rouleaux dentés sont disposés parallèles les uns par rapport aux autres, ou le système de cartouches comprend quatre cartouches (10) et quatre dispositifs de transport (50).

17. Système de cartouches selon l'une des revendications précédentes, **caractérisé en ce que**
les axes de rotation (55) des dispositifs de transport (50) sont disposés parallèlement par rapport à la surface de la tête de cartouche (21).

18. Procédé de synchronisation de flux d'au moins deux composants de départ pour un produit mélangé avec un système de cartouches selon l'une des revendications 1 à 17, qui est **caractérisé en ce qu'**au moins deux composants de départ sont extrudés à partir d'au moins deux cartouches par les orifices de cartouches,
les composants de départ sont extrudés dans les dispositifs de transport, les dispositifs de transport sont entraînés par les flux des composants de départ,
le flux, notamment le flux volumique, des composants de départ vers l'orifice d'écoulement est déterminé par la vitesse angulaire des dispositifs de transport,
une force provenant d'au moins une direction de transport est transmise sur au moins un autre dispositif de transport par le couplage des dispositifs de transport, et
le couplage est réglé de telle manière que des rapports de mélange des composants de départ définis sont atteints à l'orifice d'écoulement.

19. Procédé selon la revendication 18, **caractérisé en ce que**
les flux sont mélangés dans la zone de l'orifice d'écoulement et/ou entre l'orifice d'écoulement et l'orifice d'évacuation, de préférence moyennant l'utilisation d'un mélangeur statique.

20. Procédé selon les revendications 18 ou 19, **caractérisé en ce que**
des engrenages et/ou des rouleaux dentés sont utilisés en tant que dispositifs de transport, où les composants de départ sont transportés dans les espaces interstitiels entre les dents des engrenages et/ou des rouleaux dentés.

21. Procédé selon la revendication 20, **caractérisé en ce que**
le couplage des engrenages et/ou des rouleaux dentés est créé par l'emboitement des dents des engrenages et/ou des rouleaux dentés, où on emploie notamment une denture en développement des engrenages et/ou des rouleaux dentés.

22. Procédé selon les revendications 20 ou 21, **caractérisé en ce que**
lors de l'emboitement des dents des engrenages et/ou des rouleaux dentés, les composants de départ emmenés sont extrudés au moins partiellement d'entre les dents.

23. Procédé selon l'une des revendications 18 à 22, **caractérisé en ce que**
deux composants de départ provenant de deux cartouches sont mélangés, où deux dispositifs de transport sont employés.

24. Procédé destiné à effectuer le mélange d'un produit mélangé avec un système de cartouches selon l'une des revendications 1 à 17, **caractérisé en ce que**
le système de cartouches est employé pour le mélange de produits adhésifs sous forme de pâtes, de produits d'étanchéité sous forme de pâtes, de produits alimentaires sous forme de pâtes, de produits dentaires sous forme de pâtes, de ciments osseux inorganiques sous forme de pâtes et/ou de ciments osseux à base de polyméthylméthacrylate sous forme de pâtes, pouvant s'écouler, notamment moyennant l'utilisation d'un procédé selon l'une des revendications 18 à 23.
